(19) Europäisches Patentamt
European Patent Office
Office européen des brevets

(11) **EP 2 275 889 B1**

(12) **EUROPEAN PATENT SPECIFICATION**

(45) Date of publication and mention
of the grant of the patent:
**20.01.2021 Bulletin 2021/03**

(51) Int Cl.:
***G05B 19/425*** (2006.01)

(21) Application number: **10169640.9**

(22) Date of filing: **15.07.2010**

(54) **Actuator for movable barrier like a shutter, awning or gate**

Antrieb für bewegbaren Schlagbaum wie Rollladen, Sonnenmarkise oder Tor

Actionneur pour barrière mobile tel qu'un volet roulant, un store ou une grille

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **15.07.2009 IT VR20090107**

(43) Date of publication of application:
**19.01.2011 Bulletin 2011/03**

(73) Proprietor: **Nice S.p.A.**
**31046 Oderzo (Treviso) (IT)**

(72) Inventor: **Codognotto, Alberto**
**31046, Oderzo (Treviso) (IT)**

(74) Representative: **Citron, Massimiliano**
**Via Primo Maggio, 6**
**31020 San Fior (TV) (IT)**

(56) References cited:
**EP-A1- 0 784 146    FR-A1- 2 832 451**
**US-A- 5 729 101**

## Description

The invention refers to a drive operator for a movable barrier like a roller blind, sun awning or gate, adapted for moving the barrier between two end-stop positions. We shall refer to a drive operator for roller blinds as a non-limiting example.

It is known that such drive operators comprise a tubular gear motor inserted inside a drum around which a roller blind winds and unwinds. The roller blind is usually equipped with two plugs fixed to its free end for hitting against the top of the window opening and with burglar-resistant springs that interconnect the drum with the other end of the roller blind and lock when it is completely closed. Both these accessories are antagonist mechanical constraints for the barrier that define the two extreme end-stop positions of the drive operator. An essential procedure during the installation of these drive operators is to make the gear motor recognise the extreme end-stop positions so that it stops slightly before it (generally a few millimetres). A second installation procedure consists of assigning the movement controls to the correct rotation directions of the gear motor (clockwise or anti-clockwise). By pressing the "UP" control button, the gear motor must rotate so that the roller blind winds and not the opposite.

Whereas for a motor controlled via cable it is sufficient to invert two wires to correctly associate the rotation direction to the UP/DOWN control buttons, there is the problem that in motors controlled through remote control via radio, the association is not immediate, and is subjected to an installation procedure. The motor just must be taught which direction corresponds to the lifting and to the lowering movement , since it could have been mounted on the right or left of the roller blind (right hand motor or left hand motor, clockwise or anti-clockwise rotation).

Some models, each time they reach the end-stop position, are simply limited to making the roller blind hit against the mechanical constraints, and by detecting the variation of the stress of the motor, they stop it. This clearly causes there to repeatedly be bumps at each manoeuvre, and thus a premature degradation of both the mechanical constraints (plugs) and of the abutments (top of the window opening). In other models the end-stop positions (or in brief end-stops) are programmed and memorised in the motor according to precise, long and complex procedures made by the installer or by the user. It is desirable to avoid inexpert users or installers carrying out such procedures.

It can also happen that a gear motor is replaced or that maintenance operations alter the gear motor/roller blind configuration present at the installation time (for example, the roller blind, which can later have a different length, is replaced, or is broken or a slat of the roller blind is taken off). Consequently, the end-stops memorised by the gear motor no longer correspond to the current configuration, and there are position errors or high mechanical stresses on the roller blind (or on a part of it). It is therefore necessary a new programming, which takes a long time, is expensive and requires particular expertise of the user or installer. It would further be desirable to avoid the inexpert user or installer from carrying out such a new and long procedure.

EP 1 784 146 discloses a tubular operator that, after the mechanical installation, through monitoring an optical encoder recognizes the bump with an obstacle from the passage on a "hard" point. The user selects the end-stops positions by a remote control.

FR 2 832 451 and US 5 729 101 disclose operators capable of recognizing the end-stops positions during installation. These positions are obtained through the action of a person who acts on a remote control.

The general object of the invention is to make a drive operator that avoids the user or installer from having to program the end-stops with long and complex procedures.

Another object of the invention is to make a drive operator that avoids end-stops with long and complex procedures to be programmed after there has been a change in the system that has made the end-stops invalid.

Another object is to make a gear motor that is completely autonomous and self-sufficient during the installation and updating steps.

Such objects are obtained with a drive operator for a movable barrier like a roller blind, sun awning or gate, adapted for moving the barrier by a motor between two end-stop positions defined by antagonist mechanical constraints, characterised by the features of claim 1.

The invention is based upon the fact that the phenomena of a barrier colliding against mechanical constraints at one or the other of the end-stops are different. For example, in the case of the roller blind, the high end-stop causes the plugs to hit against the wall or the body containing the roller blind (a sharp and brief bump); the low end-stop causes the progressive (and relatively slow) packing of the roller blind on itself, which initially subtracts resistant torque from the motor, and then an enormous resistance follows generated by the locking of the burglar-resistant springs, but over a time period which is much longer than at the other end-stop.

Therefore, it is sufficient to observe a reference signal that represents a physical quantity or a state variable or a functional parameter relative to the motor or to the barrier that has a different time course during the two collision phenomena so as to be able to distinguish which end-stop, high or low, has currently been reached.

Said signal is an electrical signal, generated by means for converting the physical quantity or the state variable or the functional parameter into an electrical signal to be monitored, so that its observation occurs through electronic circuits and/or microprocessors if it has been digitalised through sampling.

In particular it is advantageous for said signal to represent the torque outputted by the motor, or the resistant torque, or the difference between the two. The first can indirectly be detected in many ways, amongst which measuring the current absorption by the motor, the voltage and/or the current phase-shift between the windings, and acquiring the angular position of the shaft of the motor (or of the drum) through an encoder. A momentum- or angular-position detection system can also be used like that described in WO2007051865, i.e. a protection device comprising

- an element fixed with respect to the movement of the movable barrier;

- a kinematic chain through which the fixed element can be connected to the barrier in a loose manner, the barrier being able to move irrespective of the action of the motor for a portion of stroke;

- detection means for detecting, inside the portion of stroke, the reciprocal position between the fixed element and the barrier;

- a processing unit that acquires position data from the detection means.

In the case of a roller blind, it is wound around a drum that is connected through a rotational play to a fixed supporting element for the roller blind or the drive shaft. Therefore, said signal represents the position of the shaft of the motor and/or the position of the roller blind, and the rotary encoder is used to acquire it.

During the first installation, the system, also automatically, is activated and moves the barrier in a random direction. Then the barrier comes against one of the two mechanical constraints, and the system records a first time course of the reference signal, and stops. It inverts the rotation direction of the motor until it reaches the other constraint, and then it records a second time course of the reference signal and stops. A new position, a few millimetres before the stop position defined by the mechanical constraints, defines the end-stop, whereas the comparative processing between the first and second time course of the reference signal qualifies an end-stop as high or low (or right and left).

Therefore the discrimination between the two end-stops is carried out through an algorithm or electronically, in any case without manual assistance and/or programming procedures needing human presence.

When the intelligence of the gear motor (a microprocessor) has determined the type of end-stop (high or low), it assigns to each rotation direction, clockwise or anti-clockwise, the lifting or lowering movement of the roller blind, so it can associate the correct rotation direction of the motor with the controls of a radio remote control. For example, the command "down" will be the one that makes it possible to reach the end-stop that has been set as "low".

In order to minimise wrong decisions and the influence of disturbances, it is preferable to adopt a calculation algorithm or an electronic decisional element that exalts the difference between the time courses of said reference signal. For this reason it is advantageous to work in the digital domain by sampling the signals and converting them with ADC devices.

It has been found that the value obtained as an integral or sum (weighted or not) of the samples of the reference signal, especially if the observed quantity coincides with the torque of the motor (outputted, resistant or the difference thereof, unexpectedly discriminates with extreme precision.

The samples for calculating the two integrals (or the corresponding digital operation, i.e. the summation) for each end-stop collision are recorded and stored in memory elements (for example RAM) and are subsequently processed.

The possibility of automatically discriminating between the two end-stops or exploiting a pre-existing stored information, makes it possible to solve the problem of programming end-stops subsequent to the first installation, or that of their control. According to the invention the drive operator is equipped with a counter device adapted for periodically starting an automatic updating procedure of the end-stops discarding the current ones. The automatic procedure envisages the temporary suspension of the stored end-stop values, the repeating of the installation procedure in which the roller blind is taken to extreme end-stop positions, against the mechanical constraints, then the assigning and recognising the high and low end-stops.

The replacement of the end-stop values occurs only when there is a substantial variation with respect to the previous end-stops. The periodic updating, which envisages the overwriting of new end-stop values over the previous ones, may occur unconditionally or only if there is incongruity between the stored values and the current ones. That is to say that at regular time intervals the end-stop positions are veryfied. If in this case there is a substantial change, i.e. the new end-stops are distant from the stored positions (for example +/- 5% of the maximum stroke as tolerance value), the end-stops are updated as described. For this purpose a logic unit of the drive operator is adapted for deleting the stored positions of the end-stops when the stored values and the actual ones differ from one another by more than a predefined tolerance value.

Even when an end-stop impact is detected in an area intermediate to the end-stop positions already stored, the procedure for acquiring new values may be started.

For example, after maintenance operations, with the invention it is possible to ascertain the type of end-stop or in any case the previous values are available. After comparing these with the current ones and after verifying if there is excessive variation, the drive operator can begin the searching and acquiring procedures of the new end-stops. Said device comprises, as mentioned, a logic unit. It can be equipped with counter means to count the manoeuvres performed and automatically start a procedure comprising the steps from (i) to (iii), in which the end-stops are recognised and updated discarding the current ones, after a predefined number of manoeuvres; and/or can be equipped with timer means to automatically start a procedure comprising the steps from (i) to (iii), after a certain amount of time has elapsed from the last automatic procedure.

Further characteristics and advantages of the invention shall become clearer from the following example description of a drive operator for movable barriers, together with the attached drawing in which:

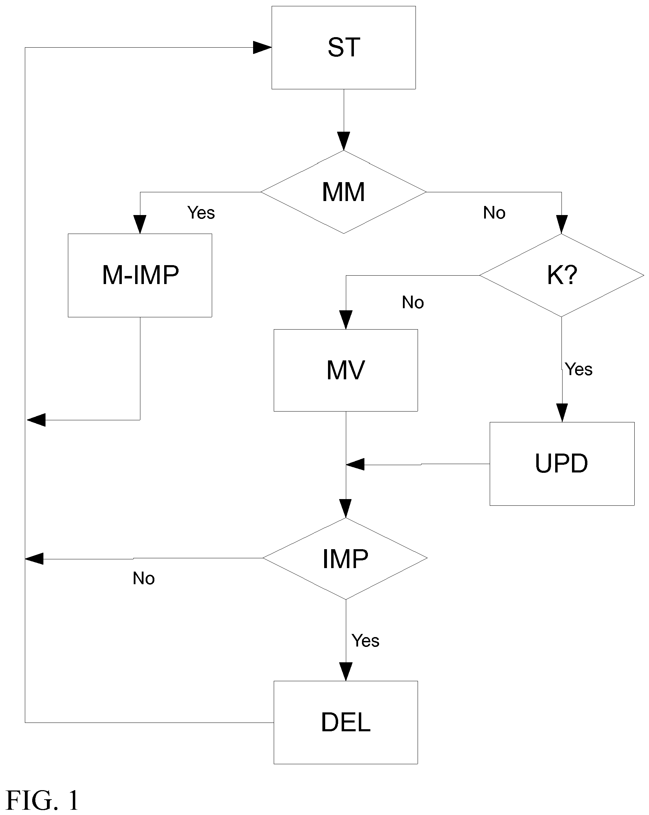

figure 1 shows a program flow graph for a drive operator according to the invention.

Here we refer to the system of WO2007051865, using the same reference numerals for corresponding elements and for the sake of comparison. The roller blind can be wound around a drum 25 in turn connected to and actuated by the output shaft 23 of the motor through a rotational play 98. Suitable elastic means 97 keep the drum in the resting position at about the centre of the rotational play.

The combined effect of the drive torque of the motor and the resistant torque generated on the drum determines a relative angular displacement between the roller blind and the driveshaft, here called x, inside the rotational play. This displacement x is due and proportional to a resulting momentum that overcomes that of the elastic means inside the play and the friction present in the roller blind.

The drive operator detects and samples the displacement x, as a function of time, and its time course during the two collisions at the two mechanical end-stops. Let qi be n samples acquired during a first "high" collision and p,- another 11 samples during a second "low" collision in the opposite direction.

The summations $\sum_{i=0}^{n} q_i$ and $\sum_{i=0}^{n} p_i$ are calculated, corresponding digitally to the integral operation. Experimentally it has been demonstrated that the summation with higher value corresponds to the samples of the low end-stop. This is because at the bottom the impact of the roller blind is softer, progressive due to the burglar-resistant springs and to the discharging of the roller blind against the ground. Therefore the variation of X is not instantaneous but progressive, and the integral is high because it is formed by samples pi with a relatively low magnitude but almost all non zero. At the top, on the other hand, the impact is sharp since the mechanical stop (safety plug) and the very wide lever arm between the plug and the play (given especially by the thickness of the wound roller blind), create an almost instantaneous momentum. Therefore the samples qi have greater magnitude than the samples pi but only some of them are non zero, and the integral is lower.

It should be noted how this technique makes it possible to consider the signal x (or another one of the mentioned or similar ones) during the collision event for a long transient, and not only for one or a few moments. This helps to emphasise peculiar differences between the time courses during the impacts at the two different end-stops and to improve the reliability of the decision of positional assignment to the end-stops.

In order to increase the response speed to the obstacle, it is preferred, together with the impact detection system based upon the aforementioned principle, to have another impact detection system, for example by comparing the magnitude of the samples qi and pi with a maximum threshold, which when exceeded indicates the impact and causes the motor to stop.

As already mentioned, thanks to the identification of the two end-stop positions it is possible to discriminate the rotation direction that the motor must have in order to carry out an opening or closing manoeuvre, especially when controlled Via radio by a remote control.

Optionally, the drive operator may also update the end-stops in a completely automatic manner.

After a certain amount of time or a number of manoeuvres, the drive operator may verify that the current end-stops correspond (within an uncertainty threshold) to those stored. If not, a new automatic procedure for searching and updating the end-stops is carried out.

With reference to fig. 1 we shall describe an example of operation.

Let us imagine the case in which after some days after the installation is finished it is necessary to replace the cloth of the roller blind.

The installer unhooks the gear motor, carries out the operations necessary for replacing the cloth and puts the gear motor back in its seat and reconnects it.

In all likeliness the characteristics acquired by the system are no longer the same. The mechanical constraints/blocks are now potentially at different distances, therefore the structure of the roller blind is no longer the same or in any case the data stored in the gear motor are not coherent with the physical reality.

The installer reactivates the gear motor (step ST) that during installation determines whether it is necessary to store new end-stops (decision step MM). If so, a multiple impact is waited for so as to fix the new end-stop in that point. A multiple impact is prudently waited for so as to be certain that there is not an accidental storage of the position relative to, for example, an obstacle.

During the normal operation of the system (not installation), the system counts the movement manoeuvres of the roller blind and in a decision block K it verifies if K manoeuvres have been reached. If not, the roller-blind is normally moved, step MV. Otherwise, the updating function of the end-stop heights is activated (step UPD). The UPD step envisages that the roller blind is driven towards the mechanical constraints/blocks of the structure seeking a bump. Once the bump has occurred it is verified that the point of impact coincides (within, for example, 40° of tolerance in the rotational angle of the drive shaft) with the end-stop point already in memory (step IMP). If the point of impact is indeed different, the system deletes the end-stop data in memory and acquires the new data (step DEL).

**Claims**

1. Drive operator for a movable barrier such as a roller shutter, awnings or gates, adapted to move the barrier by a motor between two end-stop positions defined by antagonist mechanical constraints, comprising

   - means for digitalizing through sampling a physical quantity related to the motor into an electrical signal;
   - means for acquiring said signal by measuring it indirectly through measure of the current absorption of the motor, or the voltage across its windings and/or the current phase-shift of the same, said signal representing the torque outputted by the motor, the resistant torque, or the difference between the two,
   or
   a rotary encoder for the acquisition of said signal, said signal representing the position of the motor shaft;
   - a microprocessor adapted to

      (i) monitor, through the means for acquiring, at the two end-stop positions said electrical signal whose time course during the impact of the mechanical constraints varies in a substantially repeatable manner, the time courses of said signal relative to one of the two end-stop position and the other end-stop position being different;
      (ii) obtain at least one value which expresses the difference between the time course of said signal relative to one of the two end-stop position and the other end-stop position;
      (iii) discriminate the two end-stop positions on the basis of said value, wherein said value is calculated as the integral of the signal or as a weighted or non-weighted sum of samples of the same signal.

2. Drive operator according to claim 1, comprising means for determining after and by the discrimination of the end-stop positions the rotation direction of the motor to be set in correspondence to an up/down command given by a remote control, being assigned to the up-command the motor direction equal to that which determined the recognition of the high end-stop position and vice versa.

3. Drive operator according to any one of the preceding claims, comprising a logic unit provided with counter means capable of counting the maneuvers performed and automatically start a procedure comprising the steps (i) to (iii), wherein the end-stop positions are recognized and updated discarding the actual ones, after a predefined number of maneuvers.

4. Drive operator according to any one of the preceding claims, comprising a logic unit provided with timer means capable of automatically starting a procedure comprising the steps (i) to (iii), after a certain time has elapsed since the last automatic procedure.

5. Drive operator according to claim 3 or 4, wherein the logic unit is capable of deleting the stored end-stop positions when the stored values and the actual ones differ from one another by more than a predefined tolerance value.

6. Drive operator according to any one of claims 3 to 5, wherein the logic unit is capable to disable or delay said procedure for end-stop positions close to the actual ones, so as to not detect mechanical transients of the barrier which would distort the data acquired.

**Patentansprüche**

1. Antriebsantrieb für eine bewegliche Schranke wie ein Rolltor, eine Markise oder ein Tor, mit dem die Schranke motorisch zwischen zwei Endstellungen bewegt werden kann, die durch gegenläufige mechanische Zwänge definiert sind, **dadurch gekennzeichnet, dass** es umfasst

   - Mittel zur Digitalisierung durch Abtastung einer auf den Motor bezogenen physikalischen Größe in ein elektrisches Signal,
   - Mittel zur Erfassung des genannten Signals durch indirekte Messung durch Messung der Stromaufnahme des Motors oder der Spannung an seinen Wicklungen und/oder der Strom-Phasenverschiebung desselben, wobei das genannte Signal das vom Motor abgegebene Drehmoment, das Widerstandsmoment oder die Differenz zwischen beiden darstellt,
   oder
   einem Drehgeber für die Erfassung des genannten Signals, wobei das genannte Signal die Position der Motorwelle darstellt;
   - einen Mikroprozessor, angepasst an

      (i) durch die Mittel zur Erfassung des elektrischen Signals, dessen zeitlicher Verlauf während der Einwirkung der mechanischen Zwänge im Wesentlichen wiederholbar variiert, an den beiden Endanschlagspositionen zu überwachen, wobei die zeitlichen Verläufe des Signals relativ zu einer der beiden Endanschlagspositionen und der anderen Endanschlagsposition unterschiedlich sind;

(ii) mindestens einen Wert erhalten, der die Differenz zwischen dem zeitlichen Verlauf des genannten Signals relativ zu einer der beiden Endstellungen und der anderen Endstellung ausdrückt;

(iii) die beiden Endpositionen auf der Grundlage dieses Wertes zu unterscheiden,

wobei

wird dieser Wert als das Integral des Signals oder als eine gewichtete oder nicht gewichtete Summe von Abtastwerten desselben Signals berechnet.

**2.** Antriebsoperator nach Anspruch 1, mit Mitteln zur Bestimmung der Drehrichtung des Motors nach und durch die Unterscheidung der Endanschlagspositionen, die entsprechend einem Aufwärts-/Abwärts-Befehl, der von einer Fernsteuerung gegeben wird, einzustellen ist, wobei dem Aufwärts-Befehl die Motorrichtung gleich der Richtung zugeordnet wird, die die Erkennung der oberen Endanschlagsposition bestimmt hat, und umgekehrt.

**3.** Antriebsoperator gemäß einem der vorhergehenden Ansprüche, umfassend eine Logikeinheit, die mit Zählermitteln versehen ist, die in der Lage sind, die durchgeführten Manöver zu zählen und automatisch eine Prozedur zu starten, die die Schritte (i) bis (iii) umfasst, wobei die End-Stop-Positionen nach einer vordefinierten Anzahl von Manövern erkannt und aktualisiert werden, wobei die tatsächlichen Manöver verworfen werden.

**4.** Antriebsoperator nach einem der vorhergehenden Ansprüche, bestehend aus einer Logikeinheit, die mit Zeitgebermitteln versehen ist, die in der Lage sind, ein Verfahren mit den Schritten (i) bis (iii) automatisch zu starten, nachdem seit dem letzten automatischen Verfahren eine bestimmte Zeit verstrichen ist.

**5.** Antriebsoperator nach Anspruch 3 oder 4, wobei die Logikeinheit in der Lage ist, die gespeicherten Endanschlagspositionen zu löschen, wenn die gespeicherten Werte und die tatsächlichen Werte um mehr als einen vordefinierten Toleranzwert voneinander abweichen.

**6.** Antriebsoperator nach einem der Ansprüche 3 bis 5, wobei die Logikeinheit in der Lage ist, das genannte Verfahren für Endpositionen nahe den tatsächlichen Positionen zu deaktivieren oder zu verzögern, um mechanische Transienten der Schranke, die die erfassten Daten verzerren würden, nicht zu erkennen.

## Revendications

**1.** Opérateur d'entraînement pour une barrière mobile telle qu'un volet roulant, un store ou un portail, adapté pour déplacer la barrière par un moteur entre deux positions de fin de course définies par des contraintes mécaniques antagonistes,
**caractérisé en ce qu'**il comprend

- des moyens pour numériser par échantillonnage une grandeur physique liée au moteur en un signal électrique,
- des moyens pour acquérir ledit signal en le mesurant indirectement par la mesure de l'absorption de courant du moteur, ou de la tension aux bornes de ses enroulements et/ou du déphasage du courant de
celui-ci, ledit signal représentant le couple produit par le moteur, le couple résistant, ou la différence entre les deux,
ou
un codeur rotatif pour l'acquisition dudit signal, ledit signal représentant la position de l'arbre du moteur ;
- un microprocesseur adapté à

i) surveiller, par les moyens d'acquisition, aux deux positions de butée, ledit signal électrique dont l'évolution temporelle pendant l'impact des contraintes mécaniques varie de manière sensiblement répétable, les évolutions temporelles dudit signal par rapport à l'une des deux positions de butée et à l'autre position de butée étant différentes ;
(ii) obtenir au moins une valeur qui exprime la différence entre le cours du temps dudit signal par rapport à l'une des deux positions de butée et l'autre position de butée ;
(iii) discriminer les deux positions d'arrêt d'urgence sur la base de cette valeur, où
ladite valeur est calculée comme l'intégrale du signal ou comme une somme pondérée ou non pondérée d'échantillons du même signal.

**2.** Opérateur d'entraînement selon la revendication 1, comprenant des moyens pour déterminer, après et par la discrimination des positions de fin de course, le sens de rotation du moteur à régler en correspondance avec une commande de montée et de descente donnée par une télécommande, en attribuant à la commande de montée le sens du moteur égal à celui qui a déterminé la reconnaissance de la position de fin de course haute et vice versa.

3. Opérateur de conduite selon l'une des revendications précédentes, comprenant une unité logique munie de moyens de comptage capables de compter les manœuvres effectuées et de lancer automatiquement une procédure comprenant les étapes (i) à (iii), dans laquelle les positions d'arrêt sont reconnues et mises à jour en écartant les positions réelles, après un nombre prédéfini de manœuvres.

4. Opérateur de conduite selon l'une des revendications précédentes, comprenant une unité logique munie de moyens de temporisation capables de lancer automatiquement une procédure comprenant les étapes (i) à (iii), après qu'un certain temps se soit écoulé depuis la dernière procédure automatique.

5. Opérateur d'entraînement selon la revendication 3 ou 4, dans lequel l'unité logique est capable de supprimer les positions de fin de course mémorisées lorsque les valeurs mémorisées et les valeurs réelles diffèrent les unes des autres de plus d'une valeur de tolérance prédéfinie.

6. Conduire l'opérateur selon l'une quelconque des revendications 3 à 5, dans lequel l'unité logique est capable de désactiver ou de retarder ladite procédure pour des positions d'arrêt proches des positions réelles, de manière à ne pas détecter les transitoires mécaniques de la barrière qui déformeraient les données acquises.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1784146 A
- FR 2832451
- US 5729101 A
- WO 2007051865 A